# EUROPEAN PATENT APPLICATION

(11) **EP 2 009 410 A1**
(43) Date of publication of application: **31.12.2008**
(21) Application number: 08158444.3
(22) Date of filing: 17.06.2008
(51) Int. Cl.: G01F 25/00, G01F 1/66

(54) **Flow simulating circuit for testing of flowmeters**

(30) Priority: 29.06.2007 CN 200710126361; 01.08.2007 US 831996
(71) Applicant: GENERAL ELECTRIC COMPANY, Schenectady, NY 12345 (US)
(72) Inventor: Zhou, Hua, 201800, Shanghai (CN); Gu, Yikang, 201206, Shanghai (CN); Batzinger, Thomas james, Burnt Hills, NY 12027 (US); Huang, Baoming, 201204, Shanghai (CN); Ao, Xiaolei Shirley, Lexington, MA 02420 (US); Tilden, Jeffrey, Norton, MA 02766 (US)
(74) Representative: Bedford, Grant Richard

(57) **Abstract**

A simulating circuit (2), for testing a transit-time flowmeter (1) according to an embodiment of the invention, comprises an interface circuit (20) connecting with the transit-time flowmeter. The interface circuit receives driving signals from the transit-time flowmeter and generates a trigger signal on a rising or falling edge of the driving signals. An oscillator (21) outputs a clock signal. A delay generator (221) generates a preset time delay. A Digital to Analog Converter (DAC, 25) retrieves preset digitalized waveform. The DAC is enabled by the oscillator on ending of the preset time delay and converts the preset digitalized waveform into analog waveform output. The analog waveform output is sent back to the transit-time flowmeter, and thus a transit time or and a waveform through flowing fluids is simulated.

## Description

The present invention relates generally to flowmeters, and more particularly to a flow simulating circuit for testing flowmeters.

Flowmeters are employed to measure a variety of flowing fluids through pipes of different sizes and shapes. Transit-time ultrasonic flowmeters are based on the apparent difference of the sound propagation time in a flow direction and against the flow direction. An upstream transit time is a time-of-flight that an ultrasonic pulse propagates against the flow direction. A downstream transit time is a time-of-flight that the ultrasonic pulse propagates in the flow direction. It is apparent that the upstream transit time is longer than the downstream transit time due to the flow. Since the difference in the propagation time is proportional to the flow velocity of the fluids, an ultrasonic flowmeter utilizes this relationship to measure the flow velocity.

To be confident that a flowmeter is functioning properly and providing accurate information, tests or calibrations of the flowmeters are keys to current auditing and regulatory requirements. Regarding testing of transit-time ultrasonic flowmeters, because of the determitive effects of the upstream and downstream transit times to the flow velocity measurement, great efforts have been made to test the sensitivity of the transit time measurement for the flowmeters.

U.S. Patent No. 4,762, 012, issued to Brown, refers to a test circuit which simulates liquid flow in a pipe for upstream-downstream ultrasonic flowmeters (transit-time ultrasonic flowmeters). The Brown circuit receives an electrical transit signal from the flowmeter, and sends the electrical transit signal to a gated oscillator and a connected counter, which produces an electrical signal having a duration of almost a mean transit time of an acoustic pulse between upstream and downstream transducers in the flowmeter. This transit time signal is incremented by pre-selected amounts of period units related to the gated oscillator frequency, representing the exact mean transit time, as well as positive and negative changes in upstream and downstream transit times due to flow in a hypothetical pipe carrying fluid whose velocity is to be measured. The transit time simulation signals are transmitted to a second oscillator which feeds a tank circuit to produce ringing signals i.e. sinusoidal waves. The ringing signals are directed back into the flowmeter where they are interpreted as coming from acoustic transducers.

An aspect of the invention resides in providing an improved simulating circuit for testing flowmeters.

A simulating circuit, for testing flowmeters according to an embodiment of the invention, comprises an interface circuit connecting with a flowmeter. The interface circuit receives driving signals from the transit-time flowmeter and generates a trigger signal on a rising or falling edge of the driving signals. An oscillator output clock is enabled by the trigger signal to drive a delay generator to generate a preset time delay. A Digital to Analog Converter (DAC) retrieves preset digitalized waveform. The DAC is enabled by the oscillator on ending of the preset time delay and converts the preset digitalized waveform into analog waveform output. The analog waveform output is sent back to the transit-time flowmeter and thus a transit time and a waveform through flowing fluids is simulated.

The flowmeters can be readily calibrated or tested with the simulating circuit of embodiments of the invention without employing a pipe full of fluids flowing at a known velocity.

Various advantages and features will be more readily understood from the following detailed description of preferred embodiments of the invention that is provided in connection with the accompanying drawings, in which:
FIG. 1 schematically illustrates a transit-time flowmeter and a measuring method of measuring fluids flow velocity in a pipe using the transit-time ultrasonic flowmeter.
FIG. 2 illustrates a basic architecture of a testing system for evaluating or testing the transit-time ultrasonic flowmeter according to an exemplary embodiment of the invention.
FIG. 3 illustrates a working principle of a simulating circuit of the testing system according to the exemplary embodiment of the invention.
FIG. 4 shows a circuit block diagram of the simulating circuit of FIG. 3.
FIG. 5 shows an interface circuit of the simulating circuit of FIG. 4.
FIG. 6 shows a first embodiment of a delay generator of the simulating circuit of FIG. 4.
FIG. 7 is an electrical circuit schematic of the first embodiment of the delay generator of FIG. 6.
FIG. 8A and 8B illustrates a synchronization problem, between a trigger signal and an oscillator, of the first embodiment of the delay generator in FIG. 6.
FIG. 9 shows timing diagrams of some signals and a waveform generated in a Tᵤₚ test loop, with the first embodiment of the delay generator of FIG. 6.
FIG. 10 shows a circuit of a delay-line-based oscillator according to another embodiment of the delay generator of FIG. 4.

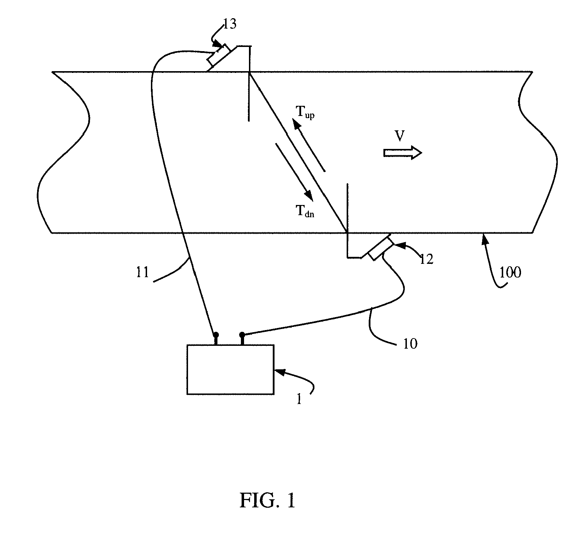

Referring to FIG. 1, a flowmeter 1 is shown to have upstream and downstream terminals 10, 11 which respectively associate with an upstream and downstream transducers 12, 13. The upstream and downstream transducers 12, 13 are mounted to an outer surface of a pipe 100 in opposite directions. The flowmeter 1 alternately sends electrical pulse driving signals to the upstream and downstream transducers 12, 13 via the upstream and downstream terminals 10, 11. The upstream transducer 12 receives and converts the electrical signals, from the flowmeter 1, into mechanical energy as ultrasonic waves. The ultrasonic waves transmit through the pipe 100 and the flowing fluids in a flow opposite direction and are received by the downstream transducer 13 after an upstream transit time Tᵤₚ. The downstream transducer 13 converts the ultrasonic waves into electrical signals and sends the electrical signals back to the flowmeter 1. A downstream transit time, that is transmitted in the flow direction, is measured in the same way in a reversed transmission path. It is apparent that the upstream transit time is longer than the downstream transit time, and the flow velocity is measured based on the difference between the upstream and downstream transit times in consideration of other parameters, such as size, material of the pipe 100 and etc.

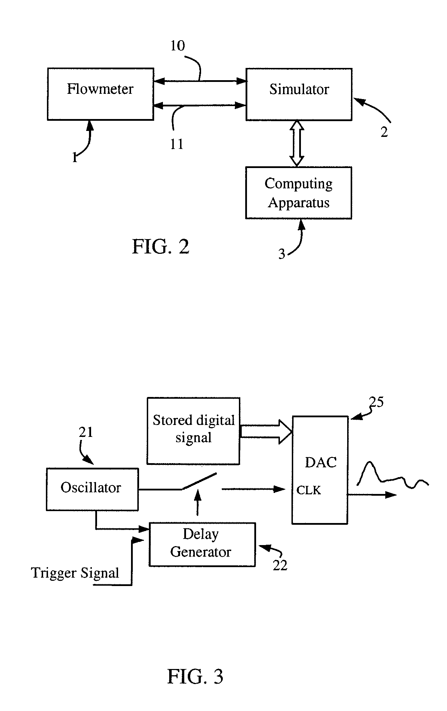

FIG. 2 shows a basic architecture of a testing system in accordance with an exemplary embodiment of the invention. The testing system includes a simulating circuit 2 connecting with the flowmeter 1 via the upstream and downstream terminals 10, 11, and a computing apparatus 3 communicating with the simulating circuit 2. The simulating circuit 2 captures driving signals from the flowmeter 1 and generates response signals back to the flowmeter 1, and thus simulates behavior of fluid flow in the pipe 100. More specifically, the simulating circuit 2 captures a driving signal from the flowmeter 1 through the upstream terminal 10, generates a trigger signal and starts a preset time delay Tᵤₚ, and then sends back a preselective waveform on ending of the time delay Tᵤₚ to the flowmeter 1 through the downstream terminal 11. Thus, an upstream transit time of the ultrasonic waves in the pipe 100 is simulated. A downstream transit time is simulated using the same method in a reversed transmission path with a different time delay T_{dn} which is shorter than the upstream time delay Tᵤₚ. The computing apparatus 3, such as a portable computer, communicates with the simulating circuit 2 so as to set and send the predetermined time delays Tᵤₚ, T_{dn} to the simulating circuit 2, as well as stores some waveforms to be selected and sent back to the flowmeter 1 to simulate the waveform of the flow in the pipe 100 on ending of each time delay Tᵤₚ, T_{dn}.

Reference is now made to FIG. 3, in which a working principle of the simulating circuit 2 according to the exemplary embodiment of the invention is shown. An expected digitalized waveform is selected and downloaded to the simulating circuit 2. The digitalized waveform is ready to be converted to an analog waveform, which can be recognized by the flowmeter 1, by a Digital to Analog Converter (DAC) 25. An oscillator 21 provides a working clock signal for the DAC 25. There is a switch to control the output of the oscillator 21 to the DAC 25. The switch can be a logic gate, for example an AND gate, which is controlled by a delay generator 22. The delay generator 22 receives a trigger signal, and starts to delay an expected period of time, for example an upstream time delay Tᵤₚ. When the expected time Tᵤₚ ends, the delay generator 22 creates a signal to turn on the switch and release the clock signal from the oscillator 21 to the DAC 25. The DAC 25 starts to work on converting the stored digitalized waveform into continuous analog waveforms. The analog waveforms are sent back to the flowmeter 1, and thus an upstream transit time of the fluid flow in the pipe 100 is simulated. The downstream transit time of the fluid flow can be simulated in the same way.

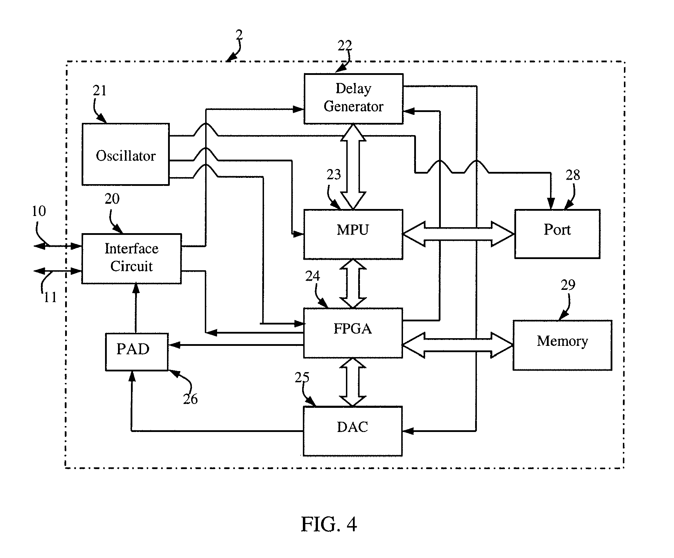

FIG. 4 shows a circuit block diagram of the simulating circuit 2 for realizing the foregoing function. The simulating circuit 2 includes an interface circuit 20 which connects with the flowmeter 1. The interface circuit 20 detects and receives driving signals from the flowmeter 1 via the upstream terminal 10 or the downstream terminal 11 of the flowmeter 1, and generates a trigger. The delay generator 22 receives the trigger signal from the interface circuit 20 and generates a preset time delay Tᵤₚ or T_{dn}. The oscillator 21 serves as a clock signal source to the DAC 25. In common mode, the switch, for example but not limited to an AND gate, between the oscillator 21 and the DAC 25 is off (as best seen in FIG. 3). Once the time delay Tᵤₚ or T_{dn} has ended, the delay generator 22 turns on the switch, and thus the DAC 25 is enabled to work. Then, the DAC 25 converts the pre-selected digitalized waveform, which is downloaded from the computing apparatus 3 and stored in a memory 29 of the simulating circuit 2, into analog waveform. In the real measurement of the fluid flow in the pipe 100, waveforms sent back to the flowmeter 1 on ending of each upstream or downstream transit time may have different frequency component and/or different amplitudes. In one embodiment, a plurality of pre-selected digitalized waveforms with different frequencies and/or different amplitudes is downloaded from the computing apparatus 3 and stored in the memory 29. Different digitalized waveforms are played back to the flowmeter 1 to simulate the dynamic real fluid flow in the pipe 100. In the real measurement of the fluid flow in the pipe 100, the signals received by the flowmeter 1 may have an attenuation in the amplitude comparing with the driving signals emitted from the flowmeter 1. For simulating such a situation, in the exemplary embodiment, the analog waveform from the DAC 25 is sent to a Programmable Attenuation Device (PAD) 26, and an amplitude value of the analog waveform has a preset attenuation by the PAD 26 before it is sent to the flowmeter 1. A Micro Processing Unit (MPU) 23 controls the communication between the simulating circuit 2 and the computing apparatus 3, as well as the working of other components in the simulating circuit 2. A Field Programmable Gate Array (FPGA) is a high-speed interface for constructing of the circuits in the simulating circuit 2. In the embodiments of the invention, the oscillator 21 may be an oscillator module which includes oscillators for providing not only a clock signal for the delay generator 22, but also clock signals for the MPU 23 and the FPGA 24.

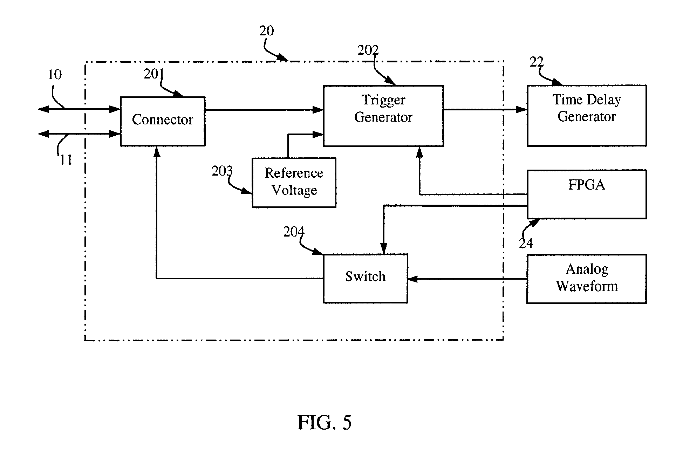

Referring to FIG. 5, the interface circuit 20 includes a connector 201 connecting with the upstream and downstream terminals 10, 11 of the flowmeter 1. The flowmeter 1 sends pulse driving signals through the upstream and downstream terminals 10, 11 alternately. In one embodiment, a rising or falling edge of the pulse driving signals creates a trigger signal which starts a preset upstream or downstream time delay. A trigger generator 202 receives the pulse driving signals from the connector 201 and generates the trigger signal. In one embodiment, the trigger generator 202 is a comparator chip with pulse driving signals input from the connector 201, a reference voltage input 203, a latch pin input controlled by the MPU 23, and an output section for sending the trigger signal to the delay generator 22. The latch pin has a character that when the voltage of the latch pin input goes high, the output of the chip will remain constant regardless of input voltages. A working principle of the trigger generator 202 is that once it detects a first falling edge or a rising edge of the driving signals by comparing the first falling or rising edges with the reference voltage 203, the trigger signal is generated and the MPU 23 allows the latch pin input to go high to maintain the trigger signal on a high voltage level regardless of the remaining pulse driver signals variation. After the analog waveform output from the DAC 25 has ended, the MPU 23 allows the latch pin input to go low for the next trigger generation. Of course there are various embodiments for design of the trigger generator 202, by utilizing different comparators or switches, for example, with a proper circuit connection arrangement, to realize the same function as generating a constant trigger signal for the delay generator 22 on a falling or rising edge of the driving signals from the flowmeter 1. A switch 204, connecting with the output of the DAC 25, automatically sends the analog waveform to the upstream or downstream port depending on where the driving signals come from. If the driving signals come from the upstream terminal 10, the feedback analog waveform will output through the downstream terminal 11, and vice versa. The switching operation of the switch 204 is controlled by the MPU 23 through FPGA 24 automatically.

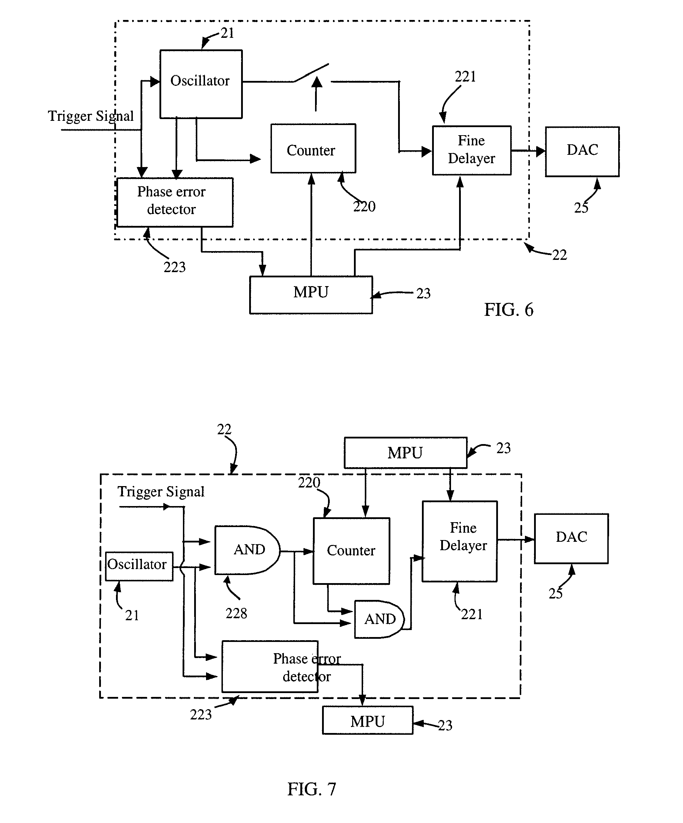

The delay generator 22 generates a programmable, highly accurate time delay Tᵤₚ or T_{dn} on receiving of the trigger signal from the interface circuit 20. To achieve a relatively long time period with a very high resolution, embodiments of the invention introduce a rough time delay T_{c} and a fine time delay T_{d} for each upstream or downstream time delay Tᵤₚ, T_{dn}. One embodiment of the delay generator 22 with the rough and fine time delay solution is schematically shown in FIGS. 6 and 7. As shown in FIG. 7, the trigger signal and a clock signal from the oscillator 21 are connected to the input terminals of an AND gate 228. Thus the clock signal from the oscillator 21 is enabled to be sent to a counter 220 on receiving of the trigger signal. Then the counter 220 begins to create a preset rough time delay T_{c}. It is obvious that the rough time delay T_{c} is an integral multiple of the running cycle of the oscillator 21. Once the rough time delay T_{c} is reached, the clock signal from the oscillator 21 is released to a fine delayer 221. The fine delayer 221 generates a preset fine time delay T_{d}. After the fine time delay T_{d} has ended, the clock signal is released to be fed to the DAC 25. In one embodiment, three 8-bit counters are cascaded to create a 24-bit counter 220, thus generating a relatively longer time range, for example 10ns - 160ms. The time over flow signal of the highest counter controls the clock path to the fine delayer 221.

In one embodiment, programmable delay lines are employed as the fine delayer 221 for the fine delay generation. The delay lines make fine time delay T_{d} with a high resolution, for example 10ps resolution.

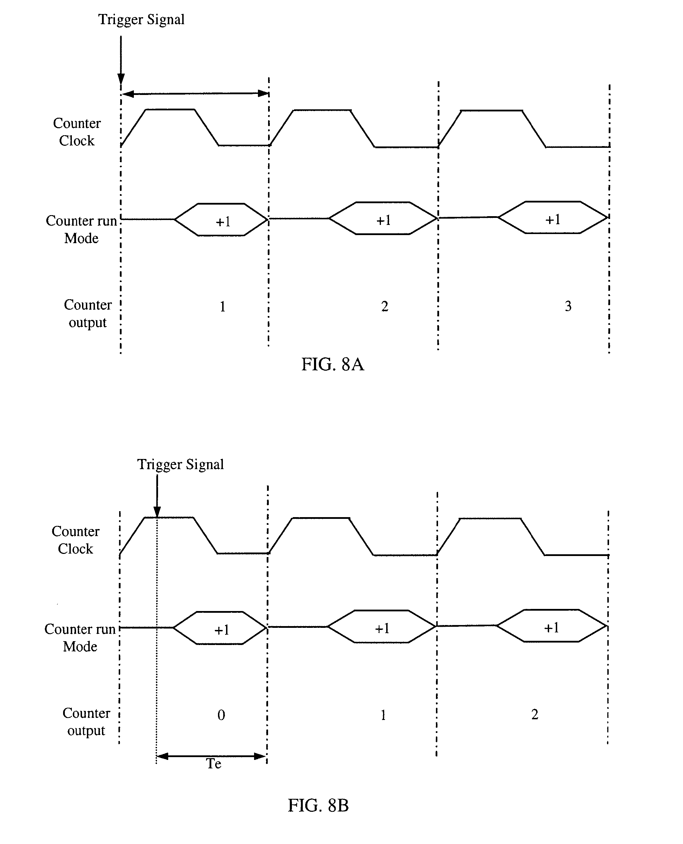

Reference is now made to FIGS. 8A and 8B, in which an unsynchronization problem between the trigger signal and the clock signal of the counter 220 is illustrated. As shown in FIG. 8A, if the trigger signal, the first rising edge of the pulse driving signal generated from the flowmeter 1, overlaps with a working edge of the clock signal to the counter 220, then the counter 220 will come out with exact timing value, which is an integral multiple of the running cycle of the clock signal (oscillator 21). However, as shown in FIG. 8B, if the trigger signal occurs in the middle of one cycle of the counter clock, and the output of the counter 220 is still read as the timing value, there is an error Tₑ between the reading and the real timing (as shown in FIG. 8B). Assuming an oscillator of 100MHZ is used, the error Tₑ may be 0~10ns.

To deal with the trigger unsynchronization problem, the delay generator 22, as shown in FIGS. 6 and 7, includes a phase error detector 223. The error between the trigger signal and the first rising edge of the clock signal is measured by the phase error detector 223 and passed to the MPU 23. The MPU 23 calculates the compensation value and adds it into the fine delayer 221. In one embodiment, a Time to Digital Converter (TDC) is utilized for the phase error detector 223. The basic working principle of the TDC is that it can measure the time interval of two pulses. The TDC has a START input connected with the trigger signal and a STOP input connected with the counter clock. Then the TDC detects an unsynchronization of the trigger signal and the counter clock signal, and sends it to the MPU 23 to calculate a compensation.

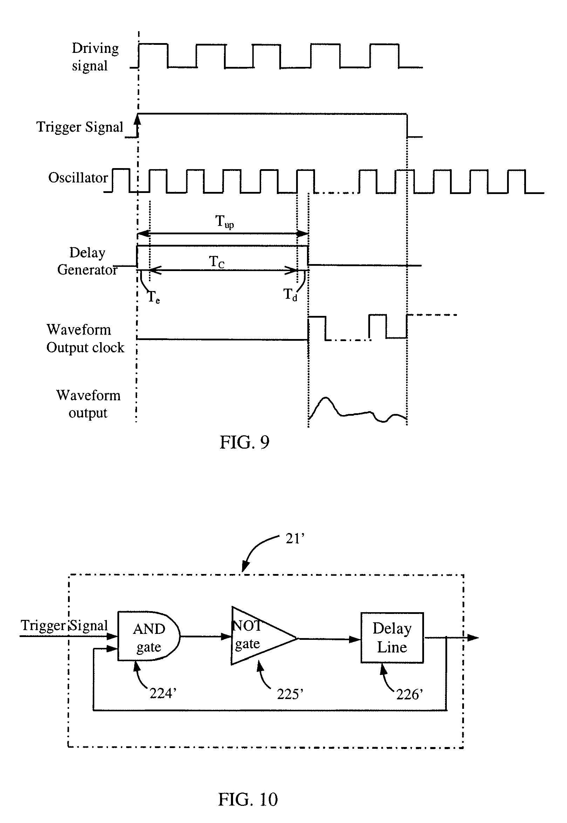

Reference is now made to FIG. 9, wherein some signals of a test loop for a predetermined time delay, for example an upstream time delay Tᵤₚ, is illustrated. An upstream time delay Tᵤₚ is set by the computing apparatus 3 and sent to the MPU 23 of the simulating circuit 2. A pre-selected digitalized waveform is selected and downloaded to the memory 29 of the simulating circuit 2. The flowmeter 1 sends driving signals to the interface circuit 20 of the simulating circuit 2 through an upstream terminal 10. The trigger generator 202 of the interface circuit 20 captures the first rising edge of the driving signals and generates a trigger signal to the delay generator 22. The counter 220 of the delay generator 22 starts to delay a rough time delay T_{c}. At the same time, the phase error detector 223 detects a lack of synchronization between the trigger signal and the counter clock signal and sends to the MPU 23 to calculate a compensation Tₑ. The compensation Tₑ is sent to the fine delayer 221 and the fine delayer 221 generates a fine time delay T_{d}, and thus the upstream time delay Tᵤₚ is generated. Upon completion of the fine time delay T_{d}, the waveform output clock signal is released and the DAC 25 is enabled to convert the preset digitalized waveform into an analog waveform output. When the analog waveform output has ended, the MPU 23 allows the latch pin input of the trigger generator 202 to go low, and thus no more trigger signal is sent to the delay generator 22 until the next test loop begins.

Referring to FIG. 10, a circuit diagram for a delay-line-based oscillator 21' used in another embodiment of the delay generator 22 is illustrated. The delay-line-based oscillator 21' includes an AND gate 224', a NOT gate 225' and a delay line 226' connected in series. The AND gate 224' receives a trigger signal from the interface circuit 20 and the delay line based oscillator 21' starts to generate clocks for counter 220 and the fine delayer 221. The delay-line-based oscillator 21' works on receipt of the trigger signal, and thus no lack of synchronization problem occurs.

In the embodiments described above, the clock signal is served to the delay generator 21 and delayed by the delay generator for a pre-set time delay Tᵤₚ or T_{dn}, and then fed to the DAC 25. In other embodiments, according to a working principle of the simulating circuit 2 shown in FIG. 3, different clock sources, for example two oscillators, respectively provide clock signals to the delay generator 22 and the DAC 25.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A simulating circuit (2) for testing flowmeters (1), comprising:
an interface circuit (20) connecting with a flowmeter, the interface circuit being configured to receive a plurality of driving signals from the flowmeter and to generate a trigger signal on a rising or falling edge of the driving signals;
an oscillator (21,21') configured to output a clock signal;
a delay generator (22) configured to be driven to generate a preset time delay upon starting of the trigger signal; and
a Digital to Analog Converter (DAC) (25) configured to retrieve a preset digitalized waveform, the DAC being enabled by the oscillator at the end of the preset time delay and to convert the preset digitalized waveform into an analog waveform output, the analog waveform output being sent back to the flowmeter.

2. The simulating circuit (2) according to claim 1, wherein the delay generator (22) includes a counter (220) and a fine delayer (221), wherein the oscillator (21) receives the trigger signal and sends the clock signal to enable the counter to generate a preset rough time delay, the oscillator being fed to a fine delayer at the end of the rough time delay, and the fine delayer generating a preset fine time delay, the clock signal being fed to the DAC at the end of the preset fine time delay.

3. The simulating circuit (2) according to claim 2, wherein the fine delayer (221) utilizes programmable delay lines to generate the fine time delay.

4. The simulating circuit (2) according to any preceding claim, further including a phase error detector (223), the phase error detector detecting a lack of synchronization between the trigger signal and a rising edge of the clock signal from the oscillator (21), and thus a time difference between the trigger signal and the rising edge of the clock signal being calculated and fed to the delay generator (22) as a compensation.

5. The simulating circuit (2) according to claim 4, wherein the phase error detector (223) is a Time to Digital Converter (TDC) measuring time interval of two pulses, the TDC having a START input connected with the trigger signal and a STOP input connected with the counter clock signal so as to detect an unsynchronization of the trigger signal and the counter clock, and send it to a microprocessor to calculate a compensation.

6. The simulating circuit (2) according to any preceding claim, wherein the oscillator (21) is a delay-line-based oscillator, the delay-line-based oscillator configured to generate a clock signal upon receives of the trigger signal, and a frequency of the delay-line-based oscillator being based on the delay time of delay lines (226') in the delay-line-based-oscillator.

7. The simulating circuit (2) according to claim 6, wherein the delay-line-based oscillator includes an AND gate (224') receiving the trigger signal, a NOT gate (225') connecting with output of the AND gate, and the delay lines connecting with the output of the NOT gate, output of the delay lines (226')feeding back to the AND gate.

8. The simulating circuit (2) according to any preceding claim, wherein the interface circuit (20) includes a trigger generator (202), the trigger generator capturing a rising or falling edge of the driving signals and generating the trigger signal to maintain at a constant voltage until the end of the analog waveform output.

9. The simulating circuit (2) according to claim 8, wherein the trigger generator (202) is a comparator with a driving signals input, the driving signals being compared with a reference, and the trigger signal being generated and maintained on a high voltage level regardless of the remaining driver pulses variation.

10. The simulating circuit (2) according to any preceding claim, wherein the interface circuit (20) is connected with upstream and downstream terminals (10, 11) of the flowmeter (1), and wherein the interface circuit includes a switch (204), the switch receiving analog waveform output and automatically selecting a correct channel to send the analog waveform back to the flowmeter.
